# EUROPÄISCHE PATENTSCHRIFT

(11) **EP 2 958 780 B1**
(45) Veröffentlichungstag und Bekanntmachung des Hinweises auf die Patenterteilung: **25.01.2017**
(21) Anmeldenummer: 14718072.3
(22) Anmeldetag: 16.04.2014
(51) Int. Cl.: B60T 17/00, B61D 27/00

(54) **VORRICHTUNG UND VERFAHREN ZUM TROCKNEN VON LUFT SOWIE SCHIENENFAHRZEUG MIT EINER DERARTIGEN VORRICHTUNG**
DEVICE AND METHOD FOR DRYING AIR, AS WELL AS A RAIL VEHICLE COMPRISING SUCH A DEVICE
DISPOSITIF ET PROCÉDÉ DE SÉCHAGE D'AIR, ET VÉHICULE FERROVIAIRE ÉQUIPÉ D'UN TEL DISPOSITIF

(30) Priorität: 25.04.2013 DE 102013207566
(43) Veröffentlichungstag der Anmeldung: 30.12.2015
(73) Patentinhaber: Siemens Aktiengesellschaft, 80333 München (DE)
(72) Erfinder: MAUDER, Mike, 06842 Dessau-Roßlau (DE)
(86) Internationale Anmeldenummer: PCT/EP2014/057711
(87) Internationale Veröffentlichungsnummer: WO 2014/173752

(56) Entgegenhaltungen:
- WO-A2-02/056401
- DE-B3-102004 051 435

## Beschreibung

Die Erfindung betrifft eine Anordnung zum Trocknen von Luft, insbesondere für eine Druckluftanlage eines Schienenfahrzeugs, mit einem Lufttrockner, der geeignet ausgebildet ist, über einen Lufttrocknereingang zu trocknende Luft aufzunehmen.

Die Erfindung betrifft weiterhin ein Schienenfahrzeug mit einer derartigen Anordnung.

Ferner betrifft die Erfindung ein Verfahren zum Trocknen von Luft, insbesondere zur Anwendung bei einer Druckluftanlage eines Schienenfahrzeugs, bei dem ein Lufttrockner über einen Lufttrocknereingang zu trocknende Luft aufnimmt.

Eine derartige Anordnung, ein derartiges Schienenfahrzeug und ein derartiges Verfahren sind aus der Patentschrift DE 196 17 829 C5 bekannt. Der dort beschriebene Lufttrockner weist zwei Trocknungskammern und ein an die Trocknungskammern angeschlossenes Luftleitungssystem zum Leiten mittels der Trocknungskammern getrockneter Luft auf. Dabei sind zwei Regenerationsleitungsabschnitte parallel geschaltet, die jeweils mit einer Regenerationsdüse versehenen sind. Um einen dieser Regenerationsleitungsabschnitte bedarfsweisen zu- und abschalten zu können, ist in Reihe zu der Regenerationsdüse dieses Regenerationsleitungsabschnittes ein Schaltmittel angeordnet, wodurch diese Vorrichtung insbesondere für den Anschluss zweier Kompressoren optimiert ist.

Eine derartige Anordnung, ein derartiges Schienenfahrzeug und ein derartiges Verfahren sind auch aus der Patentschrift DE 10 2004 051 435 B3 bekannt. Dort ist einem Kompressor ein Kühler nachgeschaltet und kühlt die bei der Verdichtung erwärmte Luft.

Der Erfindung liegt die Aufgabe zu Grunde eine Anordnung der eingangs genannten Art, ein Schienenfahrzeug mit einer derartigen Anordnung und ein Verfahren der eingangs genannten Art bereit zu stellen, die hinsichtlich äußerer Bedingungen optimiert sind, die im Bereich eines zu befahrenen schienengebundenen Verkehrsweges vorherrschen.

Zur Lösung dieser Aufgabe schlägt die Erfindung eine Anordnung mit den Merkmalen des Anspruches 1 und ein Schienenfahrzeug mit einer derartigen Anordnung gemäß Anspruch 6 vor. Erfindungsgemäß ist dabei eine Klimaanlage vorgesehen, die an einem Klimaanlagenausgang Luft bereitstellt, wobei der Lufttrocknereingang über einen Luftpfad, der insbesondere als Luftleitung ausgebildet ist, derart mit dem Klimaanlagenausgang verbunden ist, dass zumindest ein Teil der von der Klimaanlage bereitgestellten Luft die zu trocknende Luft bildet, und wobei in dem Luftpfad ein Luftkompressor angeordnet ist.

Ferner schlägt die Erfindung zur Lösung dieser Aufgabe ein Verfahren mit den Merkmalen des Anspruches 7 vor, bei dem eine Klimaanlage an einem Klimaanlagenausgang Luft bereitstellt, wobei zumindest ein Teil der von der Klimaanlage bereitgestellten Luft über einen den Lufttrocknereingang mit dem Klimaanlagenausgang verbindenden, insbesondere als Luftleitung ausgebildeten, Luftpfad als die zu trocknende Luft bereitgestellt wird und wobei die von der Klimaanlage bereitgestellte Luft vor dem Eintritt in den Lufttrockner mittels eines in dem Luftpfad angeordneten Kompressors komprimiert wird.

Bei der erfindungsgemäßen Anordnung, dem erfindungsgemäßen Schienenfahrzeug und dem erfindungsgemäßen Verfahren wird in besonders vorteilhafter Weise die zu trocknende Luft der Klimaanlage entnommen. Die von der Klimaanlage bereitgestellte Luft ist bei laufender Klimaanlage im Vergleich zu der Luft, die der Klimaanlage aus der Atmosphäre zugeführt wird, gekühlt. Damit ist sichergestellt, dass die Luft, die der Lufttrockner über seinen Lufttrocknereingang von dem im Luftpfad angeordneten Kompressor als die zu trocknende Luft aufnimmt, vorher bereits durch einen Kondensator der Klimaanlage abgekühlt wurde. Dadurch hat die zu trocknende Luft eine konstant niedrige Temperatur und auch bereits eine konstant niedrige Luftfeuchtigkeit. Es sind also konstante Bedingungen geschaffen, die es ermöglichen, die Dimensionierung von Trocknungskammern und deren Taktzeit und damit den Anteil der zur Regenerierung der Trocknungskammern erforderlichen Regenerationsluft auf diese konstanten Bedingungen zu optimieren. Somit kann der Wirkungsgrad und die Dimensionierung der gesamten Anordnung optimiert werden. Es können dadurch Energie und Kosten eingespart werden.

Ferner wird es als vorteilhaft angesehen, wenn der Lufttrockner ein an zumindest eine Trocknungskammer angeschlossenes Luftleitungssystem zum Leiten mittels der Trocknungskammer getrockneter Luft aufweist, das zumindest zwei jeweils mit einer Regenerationsdüse versehene parallel geschaltete Regenerationsleitungsabschnitte aufweist, in einem derer in Reihe zu der Regenerationsdüse ein Schaltmittel zum bedarfsweisen Zu- und Abschalten des einen Regenerationsleitungsabschnittes angeordnet ist, und wenn eine Steuereinrichtung geeignet ausgebildet ist, die Schaltmittel in Abhängigkeit des Betriebszustandes der Klimaanlage zu steuern. Denn bei einer derartigen Ausgestaltung kann unter extremen Betriebsbedingungen eine zweite, parallel geschaltete Regenerationsdüse mehr Regenerationsluft über die Schaltmittel - vorzugsweise in Form eines Magnetventils - bereitgestellt werden, um beispielsweise in einer Druckluftanlage eines Schienenfahrzeugs eine bestimmte erforderlichen Qualität der getrockneten Luft (Druckluftqualität) zu gewährleisten.

Außerdem wird es als vorteilhaft angesehen, wenn eine Sensoreinrichtung geeignet ausgebildet ist, dem Betriebszustand der Klimaanlage entsprechende Messwerte zu erfassen und über eine erste Wirkverbindung als Ausgangssignal an die Steuereinrichtung auszugeben, und wenn die Steuereinrichtung geeignet ausgebildet ist, zur Steuerung des Schaltmittels ein von dem Ausgangssignal abhängiges Steuersignal über eine zweite Wirkverbindung an das Schaltmittel auszugeben. Als Parameter zur Realisierung der erforderlichen Qualität kann also in vorteilhafter Weise der Betriebszustand der Klimaanlage - also der Umstand, ob die Klimaanlage läuft oder nicht läuft - verwendet werden.

Vorteilhaft ist es auch, wenn das Luftleitungssystem an einer zweiten Trocknungskammer angeschlossen ist, wobei die beiden Trocknungskammern mittels eines weiteren Schaltmittels wechselweise in eine Trocknungs- und eine Regenerationsphase schaltbar sind.

Vorzugsweise ermittelt die Steuereinrichtung das Steuersignal anhand des Ausgangssignals mittels einer rechnerbasierten Auswertelogik.

Zur weiteren Erläuterung der Erfindung ist in
- Figur 1: schematisch ein erstes Ausführungsbeispiel eines erfindungsgemäßen Schienenfahrzeugs mit einer ersten Ausführungsform einer erfindungsgemäßen Anordnung zum Trocknen von Luft und in
- Figur 2: schematisch ein zweites Ausführungsbeispiel des erfindungsgemäßen Schienenfahrzeugs mit einer zweiten Ausführungsform der erfindungsgemäßen Anordnung zum Trocknen von Luft gezeigt.

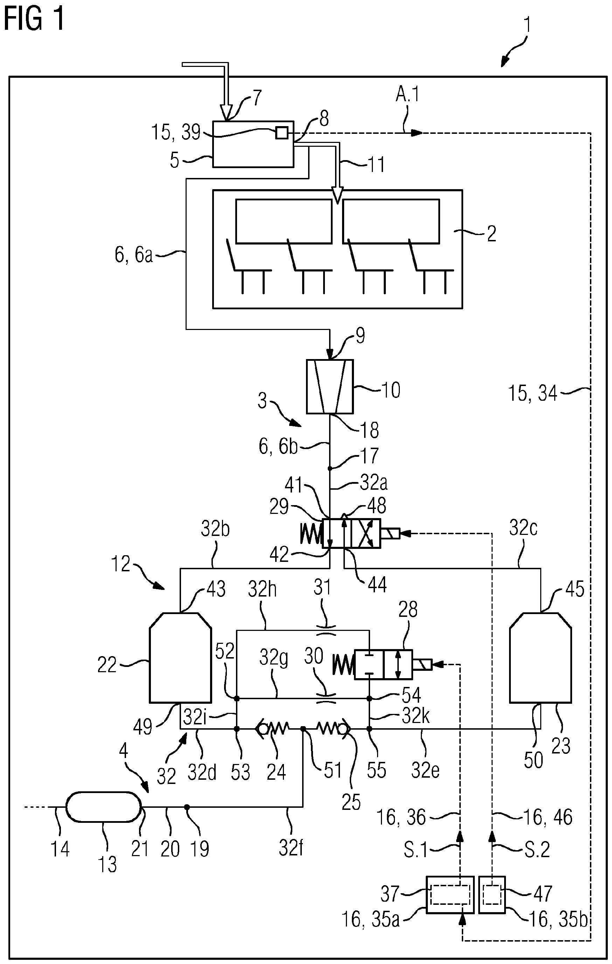

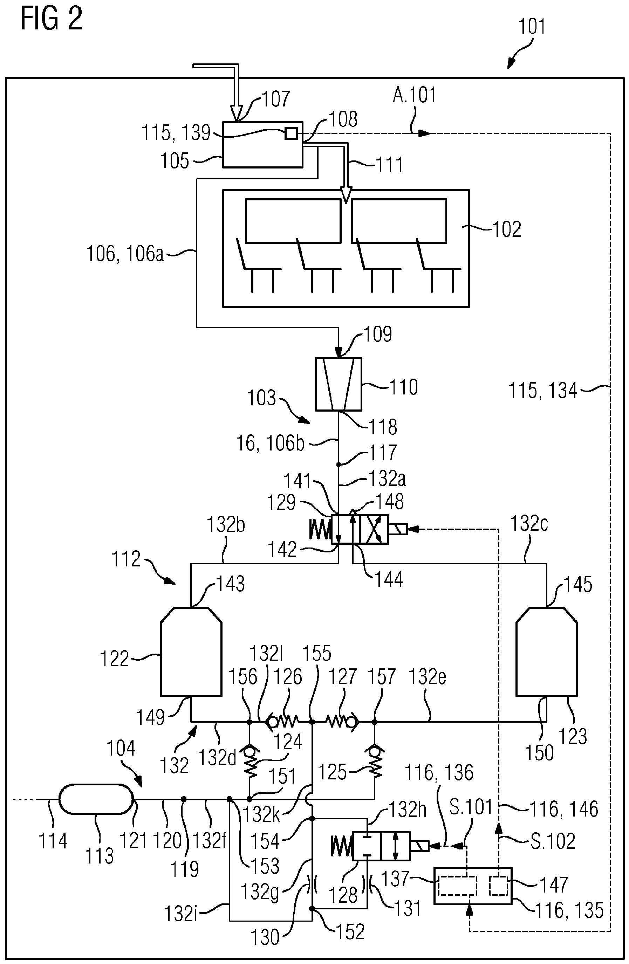

Die Figuren 1 und 2 zeigen in schematischer Darstellung ein Schienenfahrzeug 1; 101 mit einem Fahrgastinnenraum 2; 102 und jeweils einer ersten Ausführungsform 3; 103 der erfindungsgemäßen Anordnung zum Trocknen von Luft. Beide Ausführungsformen 3; 103 der erfindungsgemäßen Anordnung zum Trocknen von Luft umfassen jeweils eine als Ganzes mit 4; 104 bezeichnete Druckluftanlage sowie eine Klimaanlage 5; 105. Mittels der Klimaanlage 5; 105 wird der Druckluftanlage 4; 104 über einen Luftpfad 6; 106 zu trocknende Luft bereitgestellt. Über einen Klimaanlageneingang 7; 107 wird der Klimaanlage zu kühlende Luft aus der Atmosphäre zugeführt. Ein als Luftleitung 6a; 106a ausgebildeter Abschnitt des Luftpfades 6; 106 verbindet einen Klimaanlagenausgang 8; 108 mit einem Kompressoreingang 9; 109 eines Kompressors 10; 110 der Druckluftanlage, um einen Teil der von der Klimaanlage bereitgestellten Luft zu dem Kompressoreingang zu führen. Über einen weiteren an den Klimaanlagenausgang angeschlossenen Luftpfad 11; 111 wird ein weiterer Teil der von der Klimaanlage bereitgestellten Luft in den Fahrgastinnenraum 2; 102 geführt. Die an dem Klimaanlagenausgang der Klimaanlage bereitgestellte Luft ist bei laufender Klimaanlage gekühlt und bei nicht laufender Klimaanlage ungekühlt.

Von der Druckluftanlage 4; 104 sind bei den beiden Ausführungsformen 3; 103 der erfindungsgemäßen Anordnung jeweils neben dem Kompressor 10; 110 insbesondere ein als Ganzes mit 12; 112 bezeichneter Lufttrockner, ein Hauptbehälter 13; 113, der eine Hauptluftbehälterleitung 14; 114 speist, eine als Ganzes mit 15; 115 bezeichnete Sensoreinrichtung und eine Steuereinrichtung 16; 116 gezeigt.

Dabei ist ein Lufttrocknereingang 17; 117 des Lufttrockners 12; 112 über einen weiteren als Luftleitung 6b; 106b ausgebildeter Abschnitt des Luftpfades 6; 106 an einen Kompressorausgang 18; 118 des Kompressors 10; 110 angeschlossen. Außerdem ist ein Lufttrocknerausgang 19; 119 des Lufttrockners 12; 112 über eine Luftleitung 20; 120 an einen Hauptbehältereingang 21; 121 des Hauptbehälter 13; 113 angeschlossen.

Der Lufttrockner 12; 112 umfasst bei den beiden Ausführungsformen 3; 103 der erfindungsgemäßen Anordnung jeweils zwei in üblicher Weise mit geeignetem Granulat gefüllte Trocknungskammern 22, 23; 122, 123. Außerdem umfasst der Lufttrockner 12; 112 Rückschlagventile 24, 25; 124, 125, 126, 127, zwei Schaltmittel 28, 29; 128, 129 in Form von Magnetventilen und zwei Regenerationsdüsen 30, 31; 130, 131.

Ferner umfasst der Lufttrockner 12; 112 bei den beiden Ausführungsformen 3; 103 der erfindungsgemäßen Anordnung ein als Ganzes mit 32; 132 bezeichnetes Luftleitungssystem, das einerseits zum Einleiten der zu trocknenden Luft in die Trocknungskammern 22, 23; 122, 123 und andererseits zum Leiten mittel der Trocknungskammern getrockneter Luft dient. Dieses Luftleitungssystem 32; 132 umfasst mehrere Leitungsabschnitte 32a, 32b, ..., 32k; 132a, 132b, ..., 132k, 1321. Ein Teil der getrockneten Luft wird dabei zur Regeneration der Trocknungskammern 22, 23; 122, 123 genutzt. Hierzu bilden die beiden mit 32g, 32h; 132g, 132h bezeichneten Leitungsabschnitte, die jeweils mit einer der Regenerationsdüsen 30, 31; 130, 131 versehen und parallel geschaltet sind, Regenerationsleitungsabschnitte. Zum bedarfsweisen Zu- und Abschalten des mit 32h; 132h bezeichneten Regenerationsleitungsabschnitts, ist in diesem Regenerationsleitungsabschnitt in Reihe zu der Regenerationsdüse 31; 131 das mit 28; 128 bezeichnete Schaltmittel angeordnet.

Die Steuereinrichtung 16; 116 ist geeignet ausgebildet, das eine Schaltmittel 28; 128 in Abhängigkeit des Betriebszustandes der Klimaanlage 5; 105 zu steuern. Hierzu erfasst die Sensoreinrichtung 15; 115 dem Betriebszustand der Klimaanlage entsprechende Messwerte und gibt diese über eine erste Wirkverbindung 34; 134 als Ausgangssignal A.1; A.101 an das Steuergerät 35a; 135 der Steuereinrichtung 16; 116 aus. Zur Steuerung des einen Schaltmittels 28; 128 gibt das Steuergerät 35a; 135 der Steuereinrichtung 16; 116 dann ein von dem Ausgangssignal A.1; A.101 abhängiges Steuersignal S.1; S.101 über eine zweite Wirkverbindung 36; 136 an das eine Schaltmittel 28; 128 aus. Dabei ermittelt das Steuergerät 35a; 135 der Steuereinrichtung das Steuersignal S.1; S.101 anhand des Ausgangssignals A.1; A.101 2 mittels einer ersten rechnerbasierten Auswertelogik 37; 137.

Zur Ermittlung des Betriebszustandes der Klimaanlage 5; 105 weist die Sensoreinrichtung 15; 115 einen Sensor 39; 139 auf, der die durch ihn ermittelten Messwerte - deren jeweiliger Wert angibt, ob die Klimaanlage 5; 105 läuft oder nicht läuft - in Form des Ausgangssignals A.1; A.101 ausgibt.

Der mit 32a; 132a bezeichnete Leitungsabschnitt, dessen eine Ende den Lufttrocknereingang 17; 117 bildet, ist mit seinem anderen Ende an einen ersten Anschluss 41; 141 des weiteren Schaltmittels 29; 129 angeschlossen. Der mit 32b; 132b bezeichnete Leitungsabschnitt ist mit einem Ende mit einem zweiten Anschluss 42; 142 des weiteren Schaltmittels 29; 129 und mit seinem anderen Ende mit einem ersten Anschluss 43; 143 der einen Trocknungskammer 22; 122 verbunden. Der mit 32c; 132c bezeichnete Leitungsabschnitt ist mit einem Ende mit einem dritten Anschluss 44; 144 des weiteren Schaltmittels 29; 129 und mit seinem anderen Ende mit einem ersten Anschluss 45; 145 der anderen Trocknungskammer 23; 123 verbunden.

Ein Steuergerät 35b bzw. das Steuergerät 135 der Steuereinrichtung 16; 116 ist geeignet ausgebildet zur Steuerung des weiteren Schaltmittels 29; 129 weitere Steuersignale S.2; S.102 über eine dritte Wirkverbindung 46; 146 an das mit 29; 129 bezeichnete weitere Schaltmittel auszugeben. Mittels der weiteren Steuersignale S.2; S.102 steuert das Steuergerät 35b; 135 der Steuereinrichtung 16; 116 das weitere Schaltmittel 29; 129 derart, dass die beiden Trocknungskammern 22, 23; 122, 123 wechselweise in eine Trocknungs- und eine Regenerationsphase schaltbar sind. Dabei ermittelt das Steuergerät 35b; 135 der Steuereinrichtung 16; 116 die weiteren Steuersignale S.2; S.102 mittels einer weiteren rechnerbasierten Auswertelogik 47; 147, wobei das Umschalten nach einem festen zeitgesteuerten Takt oder in Abhängigkeit der Durchsatzmenge der zu trocknenden Luft - so wie dies beispielsweise bereits aus der Druckschrift EP 0 199 948 B1 bekannt ist - erfolgen kann. Bei der ersten Ausführungsform 3 der erfindungsgemäßen Anordnung ist die rechnerbasierte Auswertelogik 37 Teil des mit 35a bezeichneten Steuergerätes der Steuereinrichtung 16, während die weitere rechnerbasierte Auswertelogik 47 Teil des mit 35b bezeichneten weiteren Steuergerätes der Steuereinrichtung 16 ist. Im Unterschied hierzu sind die beiden rechnerbasierten Auswertelogiken 137, 147 bei der zweiten Ausführungsform der erfindungsgemäßen Anordnung Teil des Steuergerätes 135 der Steuereinrichtung 116.

Der Kompressor 10; 110 fördert Druckluft in den Leitungsabschnitt 32a; 132a, der über das zweite Schaltmittel 29; 129 wechselweise an eine der beiden Trocknungskammern 22, 23; 122, 123 anschließbar ist. Nach den Figuren 1 und 2 befindet sich der Leitungsabschnitt 32a; 132a gerade in Verbindung mit der Trocknungskammer 22; 122. Die jeweils gerade nicht mit dem Leitungsabschnitt verbundene Trocknungskammer - in den Figuren 1 und 2 ist dies die Trocknungskammer 23; 123 - ist durch das zweite Schaltmittel 29; 129 mit einer Entlüftung 48; 148 zur Atmosphäre verbunden. Die Trocknungskammern 22, 23; 122, 123 sind gegenüberliegend zu ihren ersten Anschlüssen 43, 45; 143, 145 mit zweiten Anschlüssen 49, 50; 149, 150 versehen. An den zweiten Anschluss 49; 149 der einen Trocknungskammer 22; 122 ist der mit 32d; 132d bezeichnete Leitungsabschnitt angeschlossen und an den zweiten Anschluss 50; 150 der anderen Trocknungskammer 23; 123 ist der mit 32e; 132e bezeichnete Leitungsabschnitt angeschlossen. Die beiden Leitungsabschnitte 32d, 32e; 132d, 132e münden in einen Abzweigpunkt 51; 151, von dem der mit 32f; 132f bezeichnete Leitungsabschnitt abzweigt. Im Leitungsabschnitt 32d; 132d ist das in Richtung des Abzweigpunktes 51; 151 öffnende Rückschlagventil 24; 124 angeordnet und im Leitungsabschnitt 32e; 132e ist das in Richtung des Abzweigpunktes 51; 151 öffnende Rückschlagventil 25; 125 angeordnet. Das in Richtung des Hauptbehälters 10; 110 weisende Ende des Leitungsabschnitts 32f; 132f bildet den Lufttrocknerausgang 19; 119.

Die beiden Ausführungsformen 3; 103 der erfindungsgemäßen Anordnung unterscheiden sich hinsichtlich der Anschaltung der beiden parallel geschalteten Regenerationsleitungsabschnitte 32g, 32h; 132g, 132h, über die mittels der gerade aktiven Trocknungskammer getrocknete Druckluft zu der gerade nicht aktiven Trocknungskammer geführt wird, um diese zu regenerieren.

Bei der in der Figur 1 gezeigten Ausführungsform 3 der erfindungsgemäßen Anordnung wird der jeweils aktiven Trocknungskammer die getrocknete Druckluft zur Regeneration der gerade nicht aktiven Trocknungskammer direkt entnommen. Hierzu ist ein Ende der parallel geschalteten Regenerationsleitungsabschnitte 32g, 32h in einem Abzweigpunkt 52 mit dem mit 32i bezeichneten Leitungsabschnitt verbunden, der in einem Abzweigpunkt 53 von dem Leitungsabschnitt 32d abzweigt. Das andere Ende der parallel geschalteten Regenerationsleitungsabschnitte 32g, 32h ist in einem Abzweigpunkt 54 mit dem mit 32k bezeichneten Leitungsabschnitt verbunden, der in einem Abzweigpunkt 55 von dem Leitungsabschnitt 32e abzweigt.

Bei der in der Figur 2 gezeigten zweiten Ausführungsform 103 der erfindungsgemäßen Anordnung wird - im Unterschied zu der in Figur 1 gezeigten ersten Ausführungsform 3 - getrocknete Druckluft zur Regeneration der gerade nicht aktiven Trocknungskammer dem Leitungsabschnitt 132f entnommen. Hierzu ist ein Ende der parallel geschalteten Regenerationsleitungsabschnitte 132g, 132h in einem Abzweigpunkt 152 mit dem mit 132i bezeichneten Leitungsabschnitt verbunden, der in einem Abzweigpunkt 153 von dem Leitungsabschnitt 132f abzweigt. Das andere Ende der parallel geschalteten Regenerationsleitungsabschnitte 132g, 132h ist in einem Abzweigpunkt 154 mit dem mit 132k bezeichneten Leitungsabschnitt verbunden, der in einem Abzweigpunkt 155 von dem mit 1321 bezeichneten Leitungsabschnitt abzweigt. Der Leitungsabschnitt 1321 zweigt dabei mit einem Ende in einem Abzweigpunkt 156 von dem Leitungsabschnitt 132d und mit dem anderen Ende in einem Abzweigpunkt 157 von dem Leitungsabschnitt 132e ab. In dem Leitungsabschnitt 1321 ist zwischen den beiden Abzweigpunkten 156 und 155 das in Richtung des Abzweigpunktes 156 öffnende Rückschlagventil 126 angeordnet und zwischen den beiden Abzweigpunkten 157 und 155 ist das in Richtung des Abzweigpunktes 157 öffnende Rückschlagventil 127 angeordnet.

## Patentansprüche

1. Anordnung (3; 103) zum Trocknen von Luft, insbesondere für eine Druckluftanlage (4; 104) eines Schienenfahrzeugs (1; 101),
mit einem Lufttrockner (12; 112), der geeignet ausgebildet ist, über einen Lufttrocknereingang (17; 117) zu trocknende Luft aufzunehmen,
**dadurch gekennzeichnet, dass** eine Klimaanlage (5; 105) vorgesehen ist, die an einem Klimaanlagenausgang (8; 108) Luft bereitstellt,
wobei der Lufttrocknereingang (17; 117) über einen Luftpfad (6; 106), der insbesondere als Luftleitung ausgebildet (6a, 6b; 106a, 106b) ist, derart mit dem Klimaanlagenausgang (8; 108) verbunden ist, dass zumindest ein Teil der von der Klimaanlage (5; 105) bereitgestellten Luft die zu trocknende Luft bildet, und
wobei in dem Luftpfad (6; 106) ein Luftkompressor (10; 110) angeordnet ist.

2. Anordnung (3; 103) nach Anspruch 1,
**dadurch gekennzeichnet,**
**dass** der Lufttrockner (12; 112) ein an zumindest eine Trocknungskammer (22; 122) angeschlossenes Luftleitungssystem (32; 132) zum Leiten mittels der Trocknungskammer getrockneter Luft aufweist, das zumindest zwei jeweils mit einer Regenerationsdüse (30, 31; 130, 131) versehene parallel geschaltete Regenerationsleitungsabschnitte (32g, 32h; 132g, 132h) aufweist, in einem derer in Reihe zu der Regenerationsdüse ein Schaltmittel (28; 128) zum bedarfsweisen Zu- und Abschalten des einen Regenerationsleitungsabschnittes (32h; 132h) angeordnet ist, und dass eine Steuereinrichtung (16; 116) geeignet ausgebildet ist, die Schaltmittel (28; 128) in Abhängigkeit des Betriebszustandes der Klimaanlage (5; 105) zu steuern.

3. Anordnung (3; 103) nach Anspruch 2,
**dadurch gekennzeichnet,**
**dass** eine Sensoreinrichtung (15; 115) geeignet ausgebildet ist, dem Betriebszustand der Klimaanlage entsprechende Messwerte zu erfassen und über eine erste Wirkverbindung (34; 134) als Ausgangssignal (A.1; A.101) an die Steuereinrichtung (16; 116) auszugeben, und
**dass** die Steuereinrichtung (16; 116) geeignet ausgebildet ist, zur Steuerung des Schaltmittels (28; 128) ein von dem Ausgangssignal (A.1; A.101) abhängiges Steuersignal (S.1; S.101) über eine zweite Wirkverbindung (35; 135) an das Schaltmittel (28; 128) auszugeben.

4. Anordnung (3; 103) nach einem der Ansprüche 2 oder 3, **dadurch gekennzeichnet, dass** das Luftleitungssystem (32; 132) an einer zweiten Trocknungskammer (23; 123) angeschlossen ist, wobei die beiden Trocknungskammern (22, 23; 122, 123) mittels eines weiteren Schaltmittels (29; 129) wechselweise in eine Trocknungs- und eine Regenerationsphase schaltbar sind.

5. Anordnung (3; 103) nach einem der Ansprüche 2 bis 4, **dadurch gekennzeichnet, dass** die Steuereinrichtung (16; 116) das Steuersignal (S.1; S.101) anhand des Ausgangssignals (A.1; A.101) mittels einer rechnerbasierten Auswertelogik (37; 137) ermittelt.

6. Schienenfahrzeug (1; 101) mit einer Anordnung (3; 103) zum Trocknen von Luft,
**dadurch gekennzeichnet, dass** die Anordnung (3; 103) nach einem der Ansprüche 1 bis 5 ausgebildet ist.

7. Verfahren zum Trocknen von Luft, insbesondere zur Anwendung bei einer Druckluftanlage (4; 104) eines Schienenfahrzeugs (1; 101),
bei dem ein Lufttrockner (12; 112) über einen Lufttrocknereingang (17; 117) zu trocknende Luft aufnimmt, **dadurch gekennzeichnet, dass** eine Klimaanlage (5; 105) an einem Klimaanlagenausgang (8; 108) Luft bereitstellt,
wobei zumindest ein Teil der von der Klimaanlage bereitgestellten Luft über einen den Lufttrocknereingang (17; 117) mit dem Klimaanlagenausgang (8; 108) verbindenden, insbesondere als Luftleitung (6a, 6b; 106a, 106b) ausgebildeten, Luftpfad (6; 106) als die zu trocknende Luft bereitgestellt wird und
wobei die von der Klimaanlage (5; 105) bereitgestellte Luft vor dem Eintritt in den Lufttrockner (22; 122) mittels eines in dem Luftpfad (6; 106) angeordneten Kompressors (10; 110) komprimiert wird.

8. Verfahren nach Anspruch 7,
**dadurch gekennzeichnet,**
**dass** ein an zumindest eine Trocknungskammer (22; 122) angeschlossenes Luftleitungssystem (32; 132) des Lufttrockners (12; 112) zum Leiten mittels der Trocknungskammer getrockneter Luft bereitgestellt wird, das zumindest zwei jeweils mit einer Regenerationsdüse (30, 31; 130, 131) versehene parallel geschaltete Regenerationsleitungsabschnitte (32g, 32h; 132g, 132h) aufweist in einem derer in Reihe zu der Regenerationsdüse (31; 131) ein Schaltmittel (28; 128) angeordnet ist, mittels dessen der eine Regenerationsleitungsabschnitt (32h; 132h) bedarfsweisen zu- und abgeschaltet wird, und
**dass** eine Steuereinrichtung (16; 116) die Schaltmittel (28; 128) in Abhängigkeit des Betriebszustandes der Klimaanlage (5; 105) steuert.

9. Verfahren nach Anspruch 8,
**dadurch gekennzeichnet,**
**dass** eine Sensoreinrichtung (15; 115) dem Betriebszustand der Klimaanlage entsprechende Messwerte erfasst und über eine erste Wirkverbindung ( 34; 134) als Ausgangssignal (A.1; A.101) an die Steuereinrichtung (16; 116) ausgibt und
**dass** die Steuereinrichtung (16; 116) zur Steuerung des Schaltmittels (18; 128) ein von dem Ausgangssignal (A.1; A.101) abhängiges Steuersignal (S.1; S.101) über eine zweite Wirkverbindung (36; 136) an das Schaltmittel (28; 128) ausgibt.

10. Verfahren nach einem der Ansprüche 8 oder 9,
**dadurch gekennzeichnet, dass** eine zweite an das Luftleitungssystem angeschlossene Trocknungskammer (23; 123) bereitgestellt wird, wobei die beiden Trocknungskammern (22, 23; 122, 123) mittels eines weiteren Schaltmittels (29; 129) wechselweise in eine Trocknungs- und eine Regenerationsphase geschaltet werden.

## Claims

1. Arrangement (3; 103) for drying air, in particular for a compressed air installation (4; 104) of a rail vehicle (1; 101), comprising an air dryer (12; 112) which is designed to be suitable for receiving air that is to be dried, via an air dryer inlet (17; 117), **characterized in that** an air conditioning installation (5; 105) which supplies air to an air conditioning installation outlet (8; 108) is provided, wherein the air dryer inlet (17; 117) is connected via an air channel (6; 106), which is designed in particular as an air conduit (6a, 6b; 106a, 106b), to the air conditioning installation outlet (8; 108) in such a manner that at least one portion of the air supplied by the air conditioning installation (5; 105) forms the air that is to be dried, and wherein an air compressor (10; 110) is arranged in the air channel (6; 106).

2. Arrangement (3; 103) according to Claim 1, **characterized in that** the air dryer (12; 112) has an air conduit system (32; 132), which is connected to at least one drying chamber (22; 122), for conducting air dried by means of the drying chamber, said air conduit system having at least two regeneration conduit portions (32g, 32h; 132g, 132h) which are connected in parallel and are each provided with a regeneration nozzle (30, 31; 130, 131) and in one of which a switching means (28; 128) for switching the one regeneration conduit portion (32h; 132h) on and off as required is arranged in series with the regeneration nozzle, and **in that** a control device (16; 116) is designed to be suitable for controlling the switching means (28; 128) depending on the operating state of the air conditioning installation (5; 105).

3. Arrangement (3; 103) according to Claim 2, **characterized in that** a sensor device (15; 115) is designed to be suitable for detecting measured values corresponding to the operating state of the air conditioning installation and for outputting said measured values as an output signal (A.1; A.101) via a first operative connection (34; 134) to the control device (16; 116), and **in that** the control device (16; 116) is designed to be suitable for outputting a control signal (S.1; S.101), which is dependent on the output signal (A.1; A.101), via a second operative connection (35; 135) to the switching means (28; 128) in order to control the switching means (28; 128).

4. Arrangement (3; 103) according to either of Claims 2 and 3, **characterized in that** the air conduit system (32; 132) is connected to a second drying chamber (23; 123), wherein the two drying chambers (22, 23; 122, 123) are alternately switchable by means of a further switching means (29; 129) into a drying phase and a regeneration phase.

5. Arrangement (3; 103) according to one of Claims 2 to 4, **characterized in that** the control device (16; 116) determines the control signal (S.1; S.101) with reference to the output signal (A.1; A.101) by means of a computer-based evaluation logic (37; 137).

6. Rail vehicle (1; 101) comprising an arrangement (3; 103) for drying air, **characterized in that** the arrangement (3; 103) is designed according to one of Claims 1 to 5.

7. Method for drying air, in particular for use in a compressed air installation (4; 104) of a rail vehicle (1; 101), in which an air dryer (12; 112) receives air that is to be dried, via an air dryer inlet (17; 117), **characterized in that** an air conditioning installation (5; 105) supplies air to an air conditioning installation outlet (8; 108), wherein at least one portion of the air supplied by the air conditioning installation is supplied via an air channel (6; 106), which connects the air dryer inlet (17; 117) to the air conditioning installation outlet (8; 108) and is designed in particular as an air conduit (6a, 6b; 106a, 106b), as the air that is to be dried, and wherein the air supplied by the air conditioning installation (5; 105) is compressed prior to entry into the air dryer (22; 122) by means of a compressor (10; 110) arranged in the air channel (6; 106).

8. Method according to Claim 7, **characterized in that** an air conduit system (32; 132) of the air dryer (12; 112), which air conduit system is connected to at least one drying chamber (22; 122), is provided for conducting air dried by means of the drying chamber, said air conduit system having at least two regeneration conduit portions (32g, 32h; 132g, 132h) which are connected in parallel and are each provided with a regeneration nozzle (30, 31; 130, 131) and in one of which a switching means (28; 128) is arranged in series with the regeneration nozzle (31; 131), by means of which switching means the one regeneration conduit portion (32h; 132h) is switched on and off as required, and **in that** a control device (16; 116) controls the switching means (28; 128) depending on the operating state of the air conditioning installation (5; 105).

9. Method according to Claim 8, **characterized in that** a sensor device (15; 115) detects measured values corresponding to the operating state of the air conditioning installation and outputs said measured values as an output signal (A.1; A.101) via a first operative connection (34; 134) to the control device (16; 116), and **in that** the control device (16; 116) outputs a control signal (S.1; S.101), which is dependent on the output signal (A.1; A.101), via a second operative connection (36; 136) to the switching means (28; 128) in order to control the switching means (18; 128).

10. Method according to either of Claims 8 and 9, **characterized in that** a second drying chamber (23; 123) connected to the air conduit system is provided, wherein the two drying chambers (22, 23; 122, 123) are alternately switched by means of a further switching means (29; 129) into a drying phase and a regeneration phase.

## Revendications

1. Agencement ( 3 ; 103 ) de séchage d'air, notamment pour un système ( 4 ; 104 ) d'air comprimé d'un véhicule ( 1 ; 101 ) ferroviaire,
comprenant un sécheur ( 12 ; 112 ) d'air, qui est propre à recevoir de l'air à sécher par une entrée ( 17 ; 117 ) de sécheur d'air,
**caractérisé en ce que**
il est prévu un système ( 5 ; 105 ) de conditionnement, qui met de l'air à disposition d'une sortie ( 8 ; 108 ) du système de conditionnement, l'entrée ( 17 ; 117 ) du sécheur d'air communiquant par un trajet ( 6 ; 106 ) pour de l'air, formé ( 6a, 6b ; 106a, 106b ) notamment sous la forme d'un conduit pour de l'air, avec la sortie ( 8 ; 108 ) du système de conditionnement de manière à ce qu'au moins une partie de l'air mis à disposition par le système ( 5 ; 105 ) de conditionnement forme l'air à sécher et dans lequel un compresseur ( 10 ; 110 ) d'air est monté dans le trajet ( 6 ; 106 ) pour de l'air.

2. Agencement ( 3 ; 103 ) suivant la revendication 1, **caractérisé,**
**en ce que** le sécheur ( 12 ; 112 ) d'air a un système ( 32 ; 132 ) de conduite d'air raccordé à au moins une chambre ( 22 ; 122 ) de séchage pour conduire de l'air séché au moyen de la chambre de séchage, système qui a au moins deux tronçons ( 32g, 32h ; 132g, 132h ) de conduit de régénération, montés en parallèle et munis d'une buse
( 30, 31 ; 130, 131 ) de régénération, dans l'un desquels est monté en série avec la buse de régénération un moyen ( 28 ; 128 ) de commutation pour brancher et débrancher, en fonction des besoins, le un tronçon ( 32h ; 132h ) de conduit de régénération et en ce qu'il est constitué de manière appropriée un dispositif ( 16 ; 116 ) de commande, qui commande les moyens ( 28 ; 128 ) de commutation en fonction de l'état de fonctionnement du système ( 5 ; 105 ) de conditionnement.

3. Agencement ( 3 ; 103 ) suivant la revendication 2, **caractérisé**
**en ce qu'**un dispositif ( 15 ; 115 ) de capteur est constitué de manière appropriée pour détecter des valeurs de mesure correspondant à l'état de fonctionnement du système de conditionnement et pour les envoyer, par une première liaison ( 34 ; 134 ) active, comme signal ( A.1 ; A.101 ) de sortie, au dispositif ( 16 ; 116 ) de commande et en ce que le dispositif ( 16 ; 116 ) de commande est constitué de manière appropriée pour envoyer, pour la commande du moyen ( 28 ; 128 ) de commutation, un signal ( S.1. S.101 ) de commande, dépendant du signal ( A.1. A.101 ) de sortie, par une deuxième liaison ( 35 ; 135 ) active au moyen ( 28 ; 128 ) de commutation.

4. Agencement ( 3 ; 103 ) suivant l'une des revendications 2 ou 3,
**caractérisé en ce que**
le système ( 32 ; 132 ) de conduite d'air est raccordé à une deuxième chambre ( 23 ; 123 ) de séchage, les deux chambres ( 22, 23 ; 122, 123 ) de séchage pouvant être, à l'aide d'un autre moyen ( 29 ; 129 ) de commutation, mises en alternance dans une phase de séchage et dans une phase de régénération.

5. Agencement ( 3 ; 103 ) suivant l'une des revendications 2 à 4,
**caractérisé en ce que**
le dispositif ( 16 ; 116 ) de commande détermine le signal ( S.1 ; S.101 ) de commande à l'aide du signal ( A.1 ; A.101 ) de sortie au moyen d'une logique ( 37 ; 137 ) d'exploitation reposant sur un ordinateur.

6. Véhicule ( 1 ; 101 ) ferroviaire ayant un agencement
( 3 ; 103 ) de séchage de l'air,
**caractérisé en ce que**
l'agencement ( 3 ; 103 ) est constitué suivant l'une des revendications 1 à 5.

7. Procédé de séchage d'air, à utiliser notamment dans un système ( 4 ; 104 ) d'air comprimé d'un véhicule ( 1 ; 101 ) ferroviaire,
dans lequel un sécheur ( 12 ; 112 ) d'air reçoit de l'air à sécher par une entrée ( 17 ; 117 ) du sécheur d'air, **caractérisé en ce que**
un système ( 5 ; 105 ) de conditionnement met de l'air à disposition d'une sortie ( 8 ; 108 ) du système de conditionnement,
dans lequel au moins une partie de l'air mise à disposition par le système de conditionnement est mise à disposition comme air à sécher par un trajet ( 6 ; 106 ) d'air mettant l'entrée ( 17 ; 117 ) du sécheur d'air en communication avec la sortie ( 8 ; 108 ) du système de conditionnement, en étant constitué notamment sous la forme d'un conduit ( 6a, 6b ; 106a, 106b ) pour de l'air et
dans lequel l'air mis à disposition par le système ( 5 ; 105 ) de conditionnement est, avant l'entrée dans le sécheur ( 22 ; 122 ) d'air, comprimé au moyen d'un compresseur ( 10 ; 110 ) monté dans le trajet ( 6 ; 106 ) d'air.

8. Procédé suivant la revendication 7,
**caractérisé**
**en ce qu'**un système ( 32 ; 132 ) de conduite d'air du sécheur ( 12 ; 112 ) d'air, raccordé à au moins une chambre ( 22 ; 122 ) de séchage, est mis à disposition pour conduire de l'air séché au moyen de la chambre de séchage, système qui a au moins deux tronçons ( 32g, 32h ; 132g, 132h ) de conduit de régénération, montés en parallèle et munis chacun d'une buse ( 30, 31 ; 130, 131 ) de régénération, dans l'un desquels est monté en série avec la buse ( 31 ; 131 ) de régénération un moyen ( 28 ; 128 ) de commutation à l'aide duquel le un tronçon ( 32h ; 132h ) du conduit de régénération peut, suivant les besoins, être branché et débranché et en ce qu'un dispositif ( 16 ; 116 ) de commande commande le moyen ( 28 ; 128 ) de commutation en fonction de l'état de fonctionnement du système ( 5 ; 105 ) de conditionnement.

9. Procédé suivant la revendication 8,
**caractérisé**
**en ce qu'**un dispositif ( 15 ; 115 ) de capteur détecte des valeurs de mesure correspondant à l'état de fonctionnement du système de conditionnement et les envoie, par l'intermédiaire d'une première liaison ( 34 ; 134 ) active, comme signal ( A.1. A.101 ) de sortie au dispositif ( 16 ; 116 ) de commande et
**en ce que** le dispositif ( 16 ; 116 ) de commande envoie, pour commander le moyen ( 18 ; 128 ) de commutation au moyen ( 28 ; 128 ) de commutation, par l'intermédiaire d'une deuxième liaison ( 36 ; 136 ) active, un signal ( S.1 ; S.101 ) de commande, qui dépend du signal ( A.1 ; A.101 ) de sortie.

10. Procédé suivant l'une des revendications 8 ou 9, **caractérisé en ce qu'**
on met à disposition une deuxième chambre ( 23 ; 123 ) de séchage raccordée au système de conduite d'air, les deux chambres ( 22, 23 ; 122, 123 ) de séchage étant, à l'aide d'un autre moyen ( 29 ; 129 ) de commutation, mises en alternance dans une phase de séchage et dans une phase de régénération.
